# EUROPEAN PATENT SPECIFICATION

(11) **EP 0 650 294 B1**
(45) Date of publication and mention of the grant of the patent: **19.05.1999**
(21) Application number: 94115996.4
(22) Date of filing: 11.10.1994
(51) Int. Cl.: H04N 5/63, H02M 3/335

(54) **Switch mode power supply circuit**
Schaltnetzteil
Circuit d'alimentation à découpage

(30) Priority: 20.10.1993 GB 9321583
(43) Date of publication of application: 26.04.1995
(73) Proprietor: THOMSON multimedia, 92648 Boulogne Cédex (FR)
(72) Inventor: Hoh, Kian Pee, Singapore 1647 (SG); Wu, Chun Hsing, Singapore 2057 (SG)
(74) Representative: Brykman, Georges

(56) References cited:
- EP-A- 0 525 652
- DE-A- 3 720 600

## Description

The invention relates to a switch mode power supply circuit according to the introductory part of claim 1. Such circuits generally are used in TV receivers and video recorders.

A first example of a known switch mode power supply is described in a German patent application DE 37 20 600 further referred to as D2.

In D2 is described a self oscillating switch mode power supply. A power switching transistor TR1 has a control electrode which is fed through a relay RL 12 having two positions. In a first position al the base receives a current from a current supply 8. In a second position b1, the current that may fed the base, for instance from a rectified AC regulator 1 is dropped through an absorbing circuit. Regulation system is provided to deliver power supply according to the need of a load 7.

A second example of such a known switched mode power supply which is nearer from the present invention is described in EP patent application EP 0525 652 A12 further referred to as D1.

The power supply described in Dl comprises a power transistor TP29; having a control electrode connected via a base network, to a control circuit 20.

When first coupled to an AC mains 22, supply for control circuit 20 is provided by a start-up current supply from a capacitor CP 28 coupled to an unregulated voltage Vin coming from a bridge rectifier 24.

The energy of control circuit 20 is then provided by capacitor CP28, the value of which is 320µF.

Said power supply of Dl is under control of a microprocessor 82 used, among other, to switch the power supply between ON and STAND BY mode.

The circuit of D7 is characterised by having a capacitor CP 24, to sweep out the base charge in power transistor TP20 at the trailing edge of a pulse.

This is important to prevent power transistor TP29 from heating and also to have a better regulation of the delivered power supply.

Within circuits of this art the following requirement does also exist. To ensure that said power transistor is fully turned on, the current flowing into the base must be sufficiently large. Said charging capacitor acts as a reservoir of charges to supply the necessary base current. That means most current for the control of said power transistor is sourced from said charging capacitor. Hence, the charges stored in this charging capacitor are vital for the reliability of the power supply. Insufficient charge will result in insufficient base current, said power transistor will not be in the saturation region resulting in reduced reliability and at times immediate destruction. With respect to said requirement circuits according to prior art used up to now suffer from the following disadvantages:
1) Before the capacitor is fully charged up, the pulse train appears at the collector of the power transistor and starts to toggle said transistor ON. The base current depends heavily on the stored charges on said charging capacitor as the current from the collector of driving transistor will not be able to react and provide sufficient base current. Moreover, during start up, there is no current feeding back from the secondary winding of the transformer via a diode to provide the necessary base current. The base current depends largely on the stored charges in the capacitor.
2) When the set is switched from STAND-BY to ON, current from the collector of the driving transistor is supplied to many paths. this includes:
   . the oscillator circuit for generating the sawtooth waveform
   . the micro-controller
   . further transistors and resistors of the circuit.
   This reduces the amount of current required to charge up said charging capacitor.
3) If the set is safely turned ON, the base current is largely supplied by a current feedback through a diode. However, in the event that the protection circuit is activated, there is no current feedback via said diode to charge up said charging capacitor. This again poses a problem. When the protection circuit is activated and the power supply shuts down, the fault signal disappears. In the absence of the fault signal, the power supply attempts a restart. Once restarted, the fault signal appears again and the power supply shuts down once more. This process, known as "hiccuping", induces great "stress" to the power supply and goes on forever until the set is switched OFF or some major components (especially the power transistor) are damaged. This invention ensures that the latter does not happen and even if it does, it is extremely rare.
   In the previous circuit, during the hiccuping process, said charging capacitor will not be fully charged up. In the absence of the feedback current via said diode, the only current source is via a further resistor. However, as mentioned above, due to the many current paths common to the charging path of the charging capacitor, this capacitor will not be sufficiently charged before the fault signal disappears and the pulse train appearing at the collector of the driving transistor to attempt a restart i.e. turning the power transistor ON. As the "hiccuping" goes on, the amount of charge accumulated across said charging capacitor depends on the capacitance of said capacitor and a resistor and the interval of "hiccuping". Of course, if the capacitance of the charging capacitor is reduced, said capacitor can be fully charged up but then the stored charges will be less and the capacitor will not be able to provide the base current for a sufficient duration to turn on said power transistor.

It is an object of the present invention to modify said switch mode power supply circuit in such a way that said disadvantages are avoided ensuring that under all conditions like switching from OFF to STAND-BY or from STAND-BY to ON or during repeatedly turning OFF and ON the receiver as well as during operation of the protection circuit proper controlling of the power transistor is achieved.

According to the invention circuit means are provided ensuring that after switching the supply from OFF mode or from STAND-BY mode to normal ON mode said charging capacitor is fully charged before said switching voltage appears at the base of said power transistor.

By using the invention the following major advantages are achieved.
1) The invention on the power up circuit allows the micro-controller to be properly powerup at the "STAND-BY" mode.
2) The invention on the power up circuit creates a delay to allow a further capacitor whose role is similar to said charging capacitor to charge up fully before the set can be switched from STAND-BY to ON.
3) The invention allows charging capacitor to be fully charged up in the STAND-BY mode instead of beginning to charge up when the TV is switched ON. This ensures said capacitor to be fully charged up before the pulse train appears at the collector of said driver transistor and attempts to switch the power transistor ON.
4) The invention allows a larger charging capacitor (470µF) by limiting the number of current paths when said capacitor is charged without any feedback current via said mentioned diode. This allows more stored charges and hence ensures sufficient base drive at all times.

In addition to the above advantages, the interaction between the power up circuit and the start-up circuit creates further gains :
1) Acts as an under voltage protection. This is useful as it prevents any attempt to turn the power supply on when the voltage across the charging capacitor is too low. A low voltage across said capacitor signifies insufficient stored charges and hence will not be able to maintain the base current to drive the power transistor ON for sufficient turn on duration.
2) Provides a delay when the TV is continuously switched from STAND-BY to ON.
3) Provides a delay when the hiccuping process is in order. This delay allows the charging capacitor to be fully charged and enhances the reliability of the power supply.

According to one embodiment of the invention the charging capacitor is continuously charged during STAND-BY mode. In this embodiment current supplied to the driver circuit remains cut off during STAND-BY mode. According to another embodiment of the invention a delay circuit is provided for introducing a delay time between switching ON the circuit and the occurrence of the switching voltage at the base of said power transistor. Delay means may be associated to a micro-controller controlling switching of the power transistor in such a way that said charging capacitor is fully charged up before said micro-controller is powered up and ready to accept command from the user.

In order that the invention may more clearly be understood, several embodiments of the invention are more fully described, reference being made to the drawing. Within the drawing:
- Fig. 1: shows a switch mode power supply circuit including the invention,
- Fig. 2: shows a proper interrupt of the micro-controller operation and undervoltage protection,
- Fig. 3: shows a delayed start up when the power supply is switched from STAND-BY to ON and
- Fig. 4: shows a proper power up of the micro-controller.

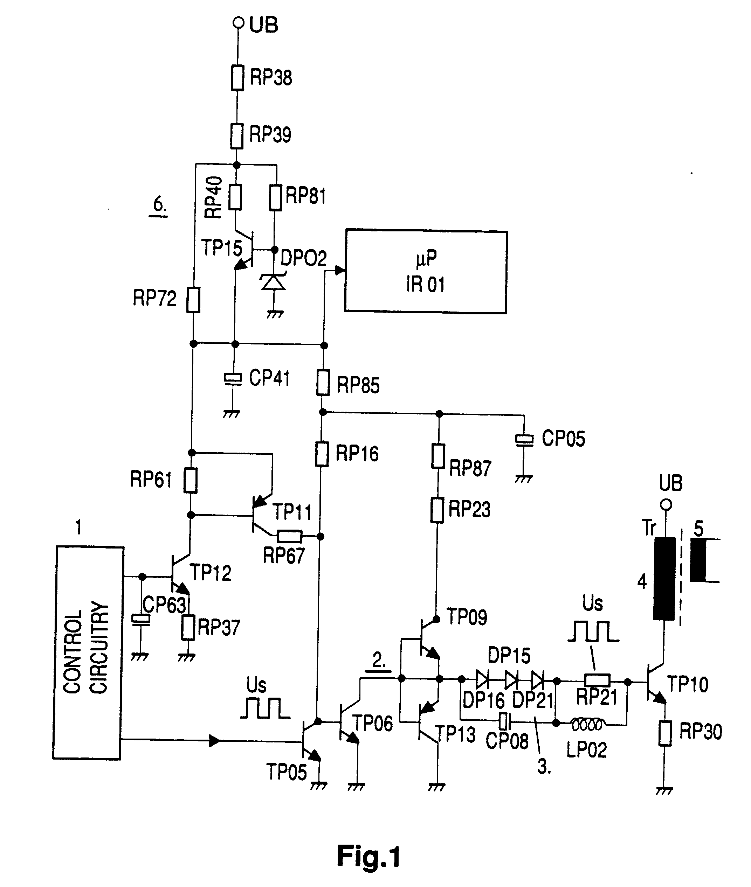

Fig. 1 shows a switch mode power supply circuit including control circuit 1 providing switching voltage Us which is fed via driver circuit 2 and base network 3 to the base of power transistor TP 10 which is connected via primary winding 4 of transformer Tr to operating voltage UB. Secondary winding 5 of transformer Tr provides via a rectifier an operating voltage. Generally several secondary windings 5 are provided for generating operating voltages of different amplitudes and polarities.

Main current source for driver circuit 2 is constituted by charging capacitor CP05 connected via circuit 6 to operating potential UC. In the following the operation of the circuit shown is described.

When the television set is plugged into the mains, the charging capacitor CP05 will charge up via resistor RP38, RP39, RP40, RP72, transistor TP15 and resistor RP85. During this time, other than supplying current to the micro-controller IR01 and charging up the capacitor CP05, the only other current path is via the resistor RP16 to turn on the transistor TP06. Since the set is at STAND-BY mode, the transistor TP12 is OFF and no current will flow through the resistor RP61. Hence the transistor TP11 is OFF. It is necessary to turn on the transistor TP06 to switch off the transistor TP09 and turn on the transistor TP13. The transistor TP09 and TP13 form the push-pull drive circuit of the power transistor TP10. When the transistors TP09 and TP13 are at these states, there is no base current to turn on the transistor TP10, which means power supply is off. Current is unable to flow via the resistors RP87, RP23, transistors TP09, diodes DP15, DP16, DP21 and the inductor LP02 to turn on the transistor TP10. This current path which forms the base drive current for the transistor TP10 consumes a large current. By curtailing this current path at this stage, most of the current that flows through the resistor RP38, RP39, RP40, RP72 and TP15 is used in charging up the capacitor CP41 to supply the micro-controller IR01 associated circuitries and to charge up the capacitor CP05 through the resistor RP85 ( as the current flowing through the resistors RP85 and RP16 to turn on the transistor TP06 is relatively small). Since the major current load ( the base drive of the transistor TP10) is removed, the capacitor CP05 can be made large to store high amount of energy and yet be fully charged up before the micro-controller IR01 completes its power up as mentioned in Part a) above. It is necessary to charge up the capacitor CP05 with large amount of energy well before the micro-controller is properly powered up and ready to accept command from the user. This is because when the user switches the set from STAND-BY to ON, the transistors TP12 and TP11 are turned ON and a train of pulses will appear at the base of the transistor TP05. This train of pulses will toggle the transistor TP05 ON and OFF. When the transistor TP05 turns on, the transistor TP06 will be turned off and vice versa. The turning off of the transistor TP06 will cause current to flow via the transistor TP11 and resistor RP76 to turn on the transistor TP09 and turn off the transistor TP13. Current then flows through the resistor RP87, RP23 and the transistor TP09 to turn on the transistor TP10. During the first few cycles of the pulse train appearing at the base of the transistor TP05, the major energy source that forms the base drive current of the transistor TP10 comes from the stored energy in the capacitor CP05. It is, therefore, important that the capacitor CP05 is fully charged up and has stored sufficient energy before the pulse train appears at the base of the transistor TP05. In other words, the capacitor CP05 must be fully charged with large amount of energy before the power supply turns on. In case the capacitor CP05 is not fully charged or has not stored sufficient energy when the power supply is turned on, there will be insufficient energy to provide the base drive current which flows via the resistors RP87, RP23, diodes DP16, DP15, DP21 and the inductor LP02 to turn on the power transistor TP10. The transistor TP10 is then not operating in saturation mode for the duration that the transistor TP09 is in the ON state and transistor TP10 can be damaged.

In summary, this invention overcomes the problem of insufficient base drive current during power supply start-up by:
i) Providing sufficient time delay between the mains on and the power supply operation. This allows the capacitor CP05 to be fully charged before it is made to supply the base current for the transistor TP10.
ii) Charging the capacitor CP05 continuously during TV STAND-BY mode and with the input socket plugged into the mains. Hence, the capacitor CP05 can react immediately to supply the energy necessary to start-up the power supply.
iii) Providing sufficient current to charge up the capacitor CP05 by limiting the number of loads to the input. This is mainly achieved by cutting off the current supplied to the base drive of the transistor TP10 during STAND-BY mode
iv) Using a large capacitance (470µF) for the capacitor CP05 to store sufficient energy.

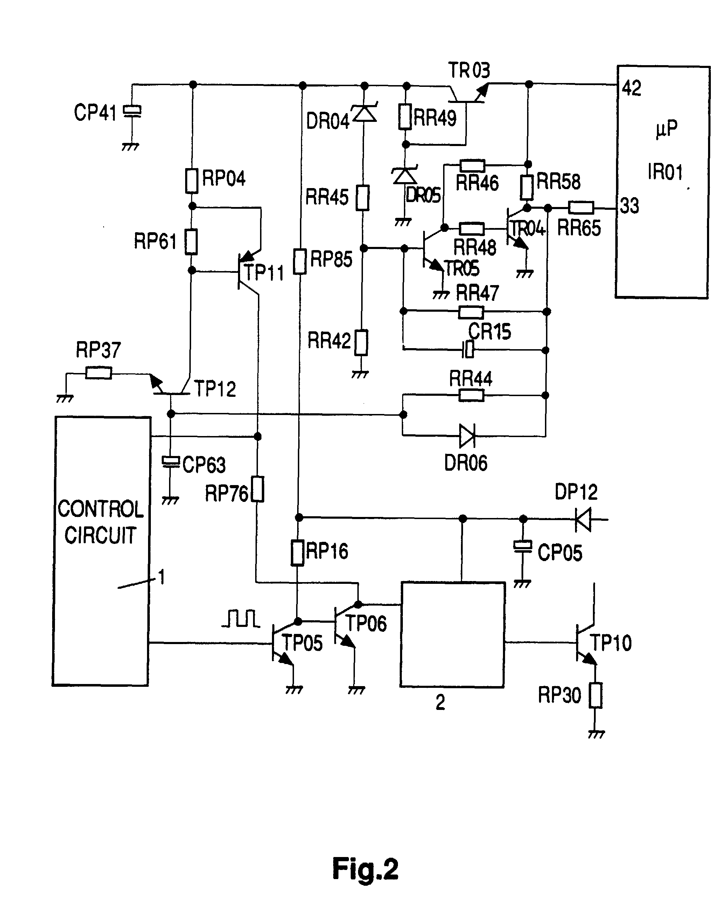

Fig. 2 shows a circuit according to Fig. 1 with additional circuit means for proper interrupt of the micro-controller IR01.

At STAND-BY or normal operation, if the voltage across the capacitor CP41 drops due to some faults, the voltage at the emitter of the transistor TR03 will also drop when the voltage across the capacitor CP41 falls below the voltage necessary to maintain the breakdown voltage of the zener diode DR05. The voltage at the output of the emitter is tied to pin 42 of the micro-controller IR01. This voltage should be maintained between 4.5 volts to 5.5 volts for proper operation of the micro-controller IR01. The micro-controller, IR01 should cease all program executions before the supply voltage at pin 42 of the micro-controller IR01 drops below 4.5 volts. This can be done by pulling the reset pin 33 of the micro-controller IR01 from the initial high to low level. This feature is incorporated into the invention. When the voltage across the capacitor CP41 falls to about 6.0 volt, the voltage at pin 42 of the micro-controller IR01 is still 5 volt but the transistor TR05 will be turned off. This is due to insufficient current flowing through the zener diode, DR04 and the resistor RR45 and insufficient feedback current via the resistors RR58 and RR47 to turn the transistor TR05 ON. When the transistor TR05 turns OFF, current will flow via the resistors RR46 and RR48 to turn the transistor TR04 ON. This, in turn, pulls the reset pin 33 of the micro-controller IR01 low as it is tied to the collector of the transistor TR04 via the resistor RR65. When the rest pin 33 of the micro-controller IR01 is pulled low, the micro-controller IR01 will stop all command executions, i.e. the micro-controller goes into RESET.
With the above feature, this invention can be used as an under voltage protection. When the transistor TR04 is turned on, the capacitor CP63 will discharge immediately via the diode DR06 and the transistor TR04 to ground. When this occurs, the transistor TP12 will be turned OFF. The turning OFF of the transistor TP12 prevents the train of pulses from appearing at the base of the transistor TP05 causing the transistor TP05 to be in the OFF state. The transistor TP06 will then be turned ON by the current flowing via the resistors, RP85 and RP16. When the transistor TP06 is ON, there will be no base drive current supplied to the transistor TP10. This effectively shuts off the power supply. This under voltage protection is useful to detect faults that cause the voltage across the capacitor CP41 to fall. It is especially useful when a fault occurs while the power supply is on. A fault will greatly reduce the current flowing through the diode DP12 and so the capacitor CP05 is unable to be charged up through this path. However, a current which is larger than normal will flow via the resistor RP85 to charge up the capacitor CP05 and provide the base drive current of the transistor TP10. This will cause the voltage across the capacitor CP41 to fall. When the voltage falls to 6 volt, the power supply will shut OFF as described above. This shutdown is necessary to ensure that the capacitor CP05 is not devoid of the amount of energy necessary to provide the base drive of the transistor TP10. If this is not prevented, insufficient base drive will occur and the transistor TP10 will be damaged.

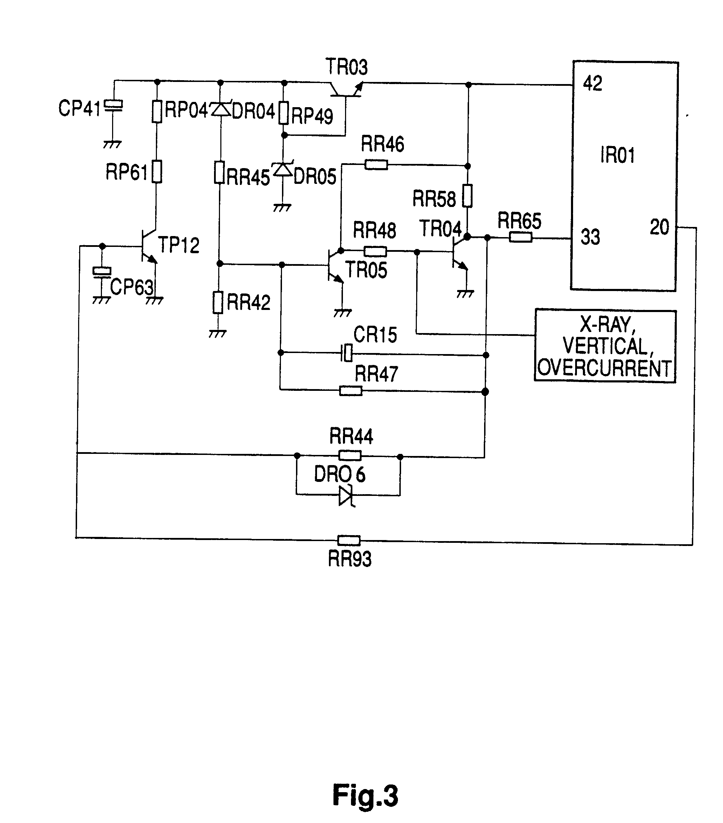

Fig. 3 shows a circuit with delayed start up when the power supply is switched from STAND-BY to ON. The operation of this circuit is the following:

When the TV set is turned from ON to STAND-BY, pin 20 of the micro-controller IR01 switches from high to low. The capacitor CP63 will then discharge via the resistor RR93. As such, the transistor TP12 will turn OFF. With the transistor TP12 in the OFF state, there will be no train of pulses at the base of the transistor TP05 causing the transistor TP05 to be permanently OFF. With the transistor TP05 in the OFF state, the transistor TP06 is turned on and there is no base drive current to the transistor TP10. The power supply is, therefore, OFF. When the set is turned from STAND-BY to ON, pin 20 of the micro-controller IR01 will be high. However, the train of pulses will not appear immediately at the base of the transistor TP05 to turn on the power supply until the capacitor CP63 is charged to the voltage level sufficient to turn on the transistor TP12. The capacitor CP63 will charge up via the resistors RR58 and RR44 according to the time constant which is equal to the sum of the resistance of the resistor RR58 and RR44 times the capacitance of the capacitor CP63. This slow charging of the capacitor CP63 and hence the delay in turning the transistor TP12 ON which subsequently delays the starting up of the power supply provides the necessary time for the capacitor CP05 to regain its full energy through the process. This feature is especially critical when the user presses the ON/OFF key continuously. If this function is absent, the power supply will turn-on too quickly without having sufficient time for the capacitor CP05 to charge up. This results in insufficient base drive to the transistor TP10 and may result in catastrophic failure of the power supply.

Fig. 3 partly incorporates protections relating to sufficient delay time when X-ray, vertical or over-current protection is activated. When any of the protection is activated, the transistor TR04 is turned on. The reset pin 33 of the micro-controller IR01 will be pulled from high to low state immediately as this pin is tied to the collector of the transistor TR04 via the resistor RR65. This instantaneous change from high to low will result in the micro-controller IR01 to suspend any further execution of instructions immediately. At the same time, the positive terminal of the capacitor CR15 is tied to ground. The negative terminal of the capacitor CR15 is then negative (-5 volts) with respect to the ground potential. This -5 volts reverse biases the transistor TR05 and switches it OFF. Current then flows via the resistors RR46 and RR48 to further turn ON the transistor TR04. At the same time, the capacitor CP63 will discharge immediately via the diode DR06 and the transistor TR04 to ground. The transistor TP12 then switches OFF and the train of pulses disappears from the base of the transistor TP05. This shuts OFF the power supply. As such, the power supply will shut OFF immediately when a fault (X-ray, vertical or over current) occurs. When the power supply is OFF, the fault condition will disappear. However, the transistor TR04 will remain ON for a while because of the current flowing via the resistors RR46 and RR48. Also, the transistor TR05 remains in the OFF state until the negative terminal of the capacitor CR15 is charged up from -5 volt to about 0.6 volt (via the diode DR04 and resistor RR45) to turn the transistor TR05 on again. Once the transistor TR05 is turned on, the transistor TR04 will be turned-OFF. Current will then flow to charge up the capacitor CP63 via the resistors RR58 and RR44. When the capacitor is charged up sufficiently, the transistor TP12 will turn ON and a pulse train will reappear at the base of the transistor TP05. This turns the power supply ON. When the power supply is restarted, a fault condition will again be detected (if the fault has not been removed yet) and the whole cycle of shutdown and restart occurs again. However, as mentioned above, the shutdown is immediate but the restart is slow. This continuous "hiccup" of the power supply with quick shutdown and long delay before restart is necessary for the overall reliability of the set and safety of the consumer. For example, if :
i) The X-radiation protection is activated.
   This circuit will allow the set to shutdown immediately to prevent the consumer from being exposed to excessive radiation. A long delay before start-up allows the capacitor CP05 to charge up sufficiently to ensure the reliability of the power supply as well as to reduce the amount of radiation. Once the power supply is restarted without isolating the fault, it will again be shutdown immediately. During this "hiccuping" sequence, no raster will appear on the television screen. Hence the radiation is greatly reduced.
ii) The vertical protection is activated.
   This circuit allows the immediate shutdown of the television set and prevents greater damage to the television set. During the "hiccuping" process (before the fault is removed), the capacitor CP05 is fully charged which prevents further damages to the set.
iii) The over current protection is activated.
   This circuit allows the immediate shutdown of the power supply and hence limits any damages to the television set. During the "hiccuping" process before the isolation of the fault, the long turn off time before the power supply attempts a restart allows the capacitor CP05 to be sufficiently charged up and reduces the stress on the transistor TP10.

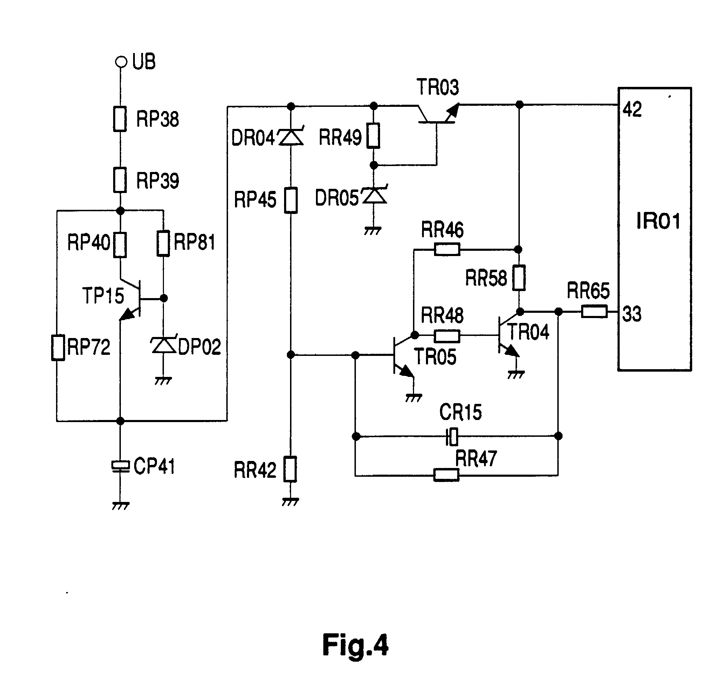

Fig. 4 shows a circuit with proper power up of the micro-controller IR01. Operation is the following:

When the television set is plugged into the mains, the capacitor CP41 will charge-up via the resistor RP38, RP39, RP40, RP72 and the transistor TP15. While charging up, current will flow via the resistor RR49 and diode DR05 to ground. This turns the transistor TR03 ON and the voltage at the emitter of the transistor TR03 rises to 5 volt. During this time, current will also flow through the resistor RR46 and RR48 to turn on the transistor TR04. The reset pin (pin 33 of the micro-controller IR01) is then low as it is tied to the collector of the transistor, TR04 via the resistor, RR65. When the voltage across the capacitor CP41 is 7.6 volts, the voltage at pin 42 of the micro-controller IR01 (which is tied to the emitter of the transistor TR03) has stabilised to 5 volt. This is required as the micro-controller is designed to operate with the voltage at pin 42 of 4.5 volt to 5.5 volt. When the voltage at CP41 reaches 7.6 volt, sufficient current will flow via the diode DR04 and the resistor RR45 to charge up the capacitor CR15. This capacitor CR15 with its positive terminal tied to the collector of the transistor TR04 (which is at the ON state) will have its negative terminal charged to about 0.6 volt and turns on the transistor TR05. Once the transistor TR05 turns on, the current flowing through the resistor RR48 is shunted to ground via the transistor TR05. This cut OFF the base current through the transistor TR04 and turns the transistor TR04 OFF. Current then flows through RR58 to charge up the positive terminal of the capacitor CR15 with time constant equal to the resistance of the resistor RR58 times the capacitance of the capacitor CR15. Since the reset pin 33 of the micro-controller IR01 is tied to the positive terminal of the capacitor CR15 via the resistor RR65, the reset voltage will also rise smoothly to and maintained at 5 volt. This smooth rise time is necessary for the proper power-up of the micro-controller IR01. After this, the micro-controller will start to function and accept command from the user.

In one practical embodiment of the invention the components shown in the figures 1-4 have the following values:

| | |
|---|---|
| DP16 - Diode type, 1N4001 | RR49 - Resistor, 1.2 kohms |
| | |
| DP21 - Diode type, 1N4001 | RR46 - Resistor, 10 kohms |
| DR06 - Diode type, 1N4148 | RR58 - Resistor, 3.3 kohms |
| DP15 - Diode type, 1N4001 | RR48 - Resistor, 10 kohms |
| DP12 - Diode type, BA157 | RR65 - Resistor, 10 kohms |
| DR04 - Zener diode, ZPD6V8 | RR47 - Resistor, 33 kohms |
| DR05 - Zener diode, ZPD5V6 | RP61 - Resistor, 3.3kohms |
| CP05 - Capacitor, 470µF | RR44 - Resistor, 8.2 kohms |
| CP63 - Capacitor, 47µF | TP15 - Transistor, S1836 |
| CP41 - Capacitor, 1000µF | TP11 - Transistor, BC558C |
| CR15 - Capacitor, 4.7µF | TP12 - Transistor, BC548C |
| RP38 - Resistor, 680 ohms | TP05 - Transistor, BC548C |
| RP39 - Resistor, 220 ohms | TP06 - Transistor, BC548C |
| RP40 - Resistor, 680 ohms | TP09 - Transistor, BC337 |
| RP72 - Resistor, 12 kohms | TP13 - Transistor, BD4340 |
| RR45 - Resistor, 3.3 kohms | TP10 - Transistor, S2000A3 |
| RP76 - Resistor, 1.2 kohms | TR03 - Transistor, BC548B |
| RR93 - Resistor, 680 ohms | TR04 - Transistor, BC548C |
| RP87 - Resistor, 4.7 ohm | TR05 - Transistor, BC548C |
| RP23 - Resistor, 5.6 ohms | LP02 - Inductor, 6µH |
| P85 - Resistor, 220 ohms | IR01 - Micro controller |
| RRP16 - Resistor, 10 kohms | ST6497 |

## Claims

1. A switch mode power supply having:
- a power transistor (TP10) having a current responsive control electrode allowing for current to flow through said transistor (TP10) when a sufficient control current is received by said control electrode and turning off said power transistor (TP10) when no current is received by said control electrode,
- a micro controller (IR01) for switching operation of said power transistor between a STAND-BY mode and a normal RUN mode,
- a control circuitry (1) having an output whose voltage level controls said current received by said control electrode, the level of said output being low when the power supply is in the power-OFF, or in the STAND-BY mode so that no current is received by said control electrode in those modes, said output providing a pulsed train (Us) when the power supply is in said normal RUN mode said pulsed train switching periodically on and off said current flowing in said control electrode, said control circuitry having an input having two states, a first and a second, in said first state said pulse train is disabled and in said second state said pulse train is enabled,
- a circuit (2) responsive to said pulsed train and coupling and decoupling said control electrode respectively to and from a current source (6, CP05) in response to the level of the pulsed train,
- a first capacitor (CP05) coupled to a power terminal of said circuit (2) responsive to said pulsed train, for storing a charge supplied via a charging path (6) to provide a supply voltage for energizing said circuit (2) responsive to said pulsed train,
- characterised in that it also has:
means (6, CP41) for ensuring that after switching the supply from OFF or STAND-BY mode to ON mode, said capacitor (CP05) is fully charged before said switching current appears at the control electrode of said switching transistor.

2. Switch mode power supply according to Claim 1, wherein the charging path (6) of said first capacitor (CP05) is connected to an end of said first capacitor when said power supply is in STAND BY mode so that said capacitor is continuously charged during STAND BY mode.

3. A power supply according to Claim 2 further comprising means (TP06) for turning off said supply current of said control electrode in said STAND-BY mode of operation.

4. A power supply according to Claim 1 further comprising means (CP63, RR58, RR44) coupled to terminal of the microprocessor (IR01) for delaying the occurrence of said pulsed train when initiating said RUN mode operation.

5. A power supply according to Claim 1 wherein said means for ensuring that after switching the supply from OFF or STAND-BY mode to ON mode, said capacitor (CP05) is fully charged before said switching current appears at the control electrode of said switching transistor, are delaying an instant when said micro-controller is ready to respond to a power-ON command until a second capacitor (CP41) that supplies power to said microcontrollers is fully charged.

6. A power supply according to Claim 1 wherein said first capacitor (CP05) has a value of about 500 microfarads.

## Patentansprüche

1. Schaltnetzteil, enthaltend:
- einen Leistungstransistor (TP10) mit einer auf einen Strom ansprechenden Steuerelektrode, die einen Stromfluß durch den Transistor (TP10), wenn der Steuerelektrode ein ausreichender Steuerstrom zugeführt wird, sowie eine Abschaltung des Leistungstransistors (TP10) ermöglicht, wenn der Steuerelektrode kein Strom zugeführt wird,
- eine Mikro-Steuereinheit (IR01) zum Umschalten des Betriebs des Leistungstransistors zwischen einem STAND-BY-Modus und einem normalen Betriebsmodus,
- eine Steuerschaltung (1) mit einem Ausgang, dessen Spannungswert den der Steuerelektrode zugeführten Strom bestimmt, wobei der Wert des Ausgangs bei "0" liegt, wenn sich das Netzteil in dem ausgeschalteten oder in dem STAND-BY-Modus befindet, so daß in diesen Modi der Steuerelektrode kein Strom zugeführt wird, wobei der Ausgang eine Impulsfolge (Us) liefert, wenn sich das Netzteil in dem normalen Betriebsmodus befindet, und die Impulsfolge den in die Steuerelektrode fließenden Strom periodisch ein- und abschaltet, und die Steuerschaltung einen Eingang mit zwei Zuständen aufweist, einem ersten und einem zweiten Zustand, und die Impulsfolge in dem ersten Zustand gesperrt und in dem zweiten Zustand freigegeben ist,
- eine Schaltung (2), die auf die Impulsfolge anspricht und in Abhängigkeit von dem Wert der Impulsfolge die Steuerelektrode jeweils an eine Stromquelle anschießt beziehungsweise von dieser trennt (6, CP05),
- einen ersten Kondensator (CP05), der mit einer Betriebsspannungsklemme der auf die Impulsfolge ansprechenden Schaltung (2) verbunden ist, zum Speichern einer über einen Ladeweg (6) zugeführten Ladung zum Bilden einer Betriebsspannung zum Speisen der auf die Impulsfolge ansprechenden Schaltung (2),
- gekennzeichnet durch:
Mittel (6, CP41), die gewährleisten, daß nach dem Umschalten des Netzteils von dem AUS- oder dem STAND-BY-Modus in den EIN-Modus der Kondensator (CP05) vollständig aufgeladen ist, bevor der Schaltstrom an der Steuerelektrode des Schalttransistors erscheint.

2. Schaltnetzteil nach Anspruch 1, wobei
der Ladeweg (6) des ersten Kondensators (CP05) mit einem Ende des ersten Kondensators verbunden ist, wenn sich das Netzteil in dem STAND-BY-Modus befindet, so daß der Kondensator während des STAND-BY-Modus ständig geladen wird.

3. Netzteil nach Anspruch 2, enthaltend
Mittel (TP06) zum Abschalten des Betriebsstroms der Steuerelektrode in dem STAND-BY-Betriebsmodus.

4. Netzteil nach Anspruch 1, enthaltend
Mittel (CP63, RR58, RR44), die mit einer Anschlußklemme des Mikroprozessors (IR01) verbunden sind, zum Verzögern des Auftretens der Impulsfolge, wenn der normale Betriebsmodus eingeleitet wird.

5. Netzteil nach Anspruch 1, wobei
die Mittel zum Gewährleisten, daß nach dem Umschalten des Netzteils von dem AUS- oder STAND-BY-Modus in den EIN-Modus der Kondensator (CP05) vollständig aufgeladen ist, bevor der Schaltstrom an der Steuerelektrode des Schalttransistors erscheint, einen Zeitpunkt verzögern, in dem die Mikro-Steuereinheit bereit ist, auf einen EIN-Steuerbefehl zu reagieren, bis ein zweiter Kondensator (CP41), der die Mikro-Steuereinheit mit Betriebsspannung versorgt, vollständig aufgeladen ist.

6. Netzteil nach Anspruch 1, wobei
der erste Kondensator (CP05) einen Wert von ungefähr 500 Mikrofarad aufweist.

## Revendications

1. Une alimentation à mode de commutation dotée :
- d'un transistor de puissance (TP10) ayant une électrode de commande répondant au courant de façon qu'un courant traverse ledit transistor (TP10) lorsqu'une intensité de commande suffisante est reçue par cette électrode de commande et arrête ce transistor de puissance (TP10) lorsque aucun signal d'intensité n'est reçu par l'électrode ;
- d'un micro-contrôleur (IR01) pour commander la commutation de ce transistor de puissance du mode de Veille au mode normal de Fonctionnement ;
- d'un circuit de commande (1) ayant une sortie dont le niveau de tension commande l'intensité reçue par l'électrode, le niveau de cette sortie étant faible lorsque l'arrivée de courant est en mode d'Arrêt ou en mode de Veille, si bien qu'aucun courant n'est reçu par l'électrode de commande dans ces deux modes, la sortie fournissant un train d'impulsions (Us) lorsque l'alimentation est dans le mode normal de Fonctionnement, le train d'impulsions commutant périodiquement entre l'arrêt et le fonctionnement le courant qui passe dans l'électrode de commande, le circuit de commande ayant une entrée à deux états, un premier état dans lequel le train d'impulsions est inhibé et un second état dans lequel le train d'impulsions est activé ;
- d'un circuit (2) réagissant au train d'impulsions et raccordant tour à tour l'électrode de commande à une source de courant (6, CP05) ou la déconnectant, en fonction du niveau du train d'impulsions ;
- d'un premier condensateur (CP05) relié à une borne d'alimentation du circuit (2) réagissant au train d'impulsions, pour emmagasiner une charge fournie à travers une voie (6) de charge, de façon à fournir une tension d'alimentation destinée à activer le circuit (2) réagissant au train d'impulsions ;
- ce condensateur étant caractérisé par le fait qu'il a également :
un moyen (6, CP41) pour faire en sorte que, après commutation de l'alimentation entre le mode d'Arrêt ou le mode de Veille et le mode de Marche, le condensateur (CP05) soit complètement chargé avant que le courant de commutation n'apparaisse au niveau de l'électrode de commande du transistor de commutation.

2. une alimentation à mode de commutation correspondant à la revendication 1, dans laquelle la voie (6) de chargement du premier condensateur (CP05) est reliée à l'extrémité du premier condensateur lorsque l'alimentation se trouve en mode de Veille, de façon que le condensateur soit chargé de façon ininterrompue au cours du mode de Veille.

3. une alimentation correspondant à la revendication 2 comprenant un moyen (TP06) pour couper le courant d'alimentation de l'électrode de commande en mode de Veille.

4. une alimentation correspondant à la revendication 1 et comprenant aussi un moyen (CP63, RR58, RR44) relié à la borne du microprocesseur (IR01) pour retarder l'arrivée du train d'impulsions lors du démarrage du mode de Marche.

5. Une alimentation correspondant à la revendication 1 dans laquelle le moyen qui, après commutation de l'alimentation du mode d'Arrêt ou du mode de vielle au mode de fonctionnement, permet que le condensateur (CP05) en question soit complètement chargé avant que le courant de commutation n'apparaisse au niveau de l'électrode de commande du transistor de commutation, retarde aussi l'instant auquel le micro-contrôleur est prêt à réponde à une commande de mise sous tension jusqu'à l'instant auquel le deuxième condensateur (CP41) apportant l'électricité au micro-contrôleur est complètement chargé.

6. Une alimentation correspondant à la revendication 1 dans laquelle le premier condensateur (CP05) a une capacité d'environ 500 microfarads.
